# EUROPEAN PATENT APPLICATION

(11) **EP 1 876 691 A1**
(43) Date of publication of application: **09.01.2008**
(21) Application number: 05737284.9
(22) Date of filing: 28.04.2005
(51) Int. Cl.: H02K 33/00

(54) **MAGNETIC DRIVE ACTUATOR**

(71) Applicant: NHK SPRING CO., LTD., Yokohama-shi, Kanagawa 236-0004 (JP)
(72) Inventor: TOMINAGA, Jun, c/o NHK SPRING CO., LTD., Yokohama-shi, Kanagawa 2360004 (JP); MATSUMOTO, Atsuo, c/o NHK SPRING CO., LTD., Yokohama-shi, Kanagawa 2360004 (JP); FURUKAWA, Kazuo, c/o NHK SPRING CO., LTD., Yokohama-shi, Kanagawa 2360004 (JP)
(74) Representative: Schmitz, Jean-Marie
(86) International application number: PCT/JP2005/008207
(87) International publication number: WO 2006/117867

(57) **Abstract**

TASK

To improve the attenuation effect of a magnetic actuator against external disturbances.

SOLUTION

So that an attenuation effect owing to an electromotive force may be obtained in the magnetic actuator when a moveable part (coil support member and lens holder) supported by sheet springs is displaced, an electric resonance circuit is formed by connecting an accessory coil 26 in parallel to a drive coil 11 mounted on the moveable part, and the resonance frequency of the circuit electric resonance circuit is made to agree with that of a spring mass system of the magnetic actuator. As the drive frequency is typically in a range that substantially differs from the resonance frequency, a large damping force, effective against the resonant condition owing to external disturbances, can be obtained without substantially affecting the the drive property. Therefore, a favorable scanning drive property can be achieved by minimizing the influences of external vibrations on the light emitting and receiving control of a onboard laser radar device.

## Description

### TECHNICAL FIELD

The present invention relates to a magnetic actuator which is configured to attenuate the influences of external vibrations.

### BACKGROUND OF THE INVENTION

Conventionally known laser beam scanning devices include scanning laser radar devices, laser scanners, laser printers, laser markers and object monitoring devices. Among such various laser beam scanning devices are known scanning laser radar devices for preventing a vehicle crash. An onboard laser beam scanning actuator for use in such devices typically includes a lens holder retaining a lens for conducting a laser beam, a spring support for the lens holder that permits the lens holder to be displaced in both vertical and lateral directions of the vehicle body with respect to the axial line of the laser beam and a magnetic circuit for actuating the lens holder.

In a scanning laser radar device for preventing a vehicle crash, it is important to minimize the influences of vibrations of the vehicle owing external disturbances. Such external vibrations typically include relatively low frequency components (tens of Hz), and it is therefore necessary to provide an attenuation mechanism that can effectively attenuate such low frequency vibrations. In particular, it is desirable to effectively dampen vertical vibrations of the vehicle body. Patent Document #1 discloses a vibration attenuation mechanism which attenuates the vibrations of a steel plate without making any contact by using an electromagnetic force.

Patent Document #1: Japanese patent laid open (kokai) publication No. 05-245521

### BRIEF SUMMARY OF THE INVENTION

### TASK TO BE ACHIEVED BY THE INVENTION

Known simple methods for attenuating vibrations include applying viscoelastic material such as acrylic and silicone polymers onto the spring members. However, when viscoelastic material is used to achieve a high damping effect, the viscous effect on the spring member produces such adverse effects as the reduction in the responsiveness of the drive property and an undesired hysteresis in the driver property. Viscoelastic material such as acrylic and silicone polymers significantly changes its damping property with changes in the surrounding temperature (the property dramatically changes at the glass transition temperature), and is therefore not always able to provide a stable damping property when used in motor vehicles which may be used in both very cold and extremely hot environments.

### MEANS TO ACHIEVE THE TASK

To eliminate such problems and provide a magnetic actuator which can effectively attenuate external vibrations, has a favorable temperature property and involves very little hysteresis in its actuation, the present invention provides a magnetic actuator comprising a fixed part, a magnet attached to the fixed part, a moveable part resiliently supported by the fixed part via a spring member so as to be moveable at least in one direction, a first coil provided on the movable part and a drive circuit connected to the first coil for magnetically actuating the moveable part with a cooperation between the magnet and coil, characterized by that: an oscillation of the moveable part owing to external disturbances is attenuated by an electromotive force produced in the first coil as a result of the oscillation of the moveable part, and a second coil is connected to the first coil for adjusting an attenuation property of the first coil by separately providing an attenuation property.

As the moveable part oscillates owing to external disturbances, the coil provided on the moveable part crosses the magnetic flux of the permanent magnet, and this induces an electromotive force in the coil, provided that electric current can flow between the coil and driver. The induced electromotive force acts as a damping force that attenuates the oscillation so that the oscillation of the spring mass system of the moveable part including the coil can be attenuated.

In particular, if the second coil consists of an accessory coil connected in parallel with the first coil, the first coil can be designed for a desired drive property and the accessory coil can be optimized for a desired attenuation property. If a capacitor is connected to the accessory coil to form a resonance circuit in cooperation with the accessory coil, the resonance frequency of the resonance circuit can be readily adjusted so that an optimum attenuation can be obtained. The accessory coil may be attached to the fixed part, but may also be attached to the moveable part along side the first coil or drive coil.

Alternatively, the second coil may consist of a short circuit coil provided on the moveable part separately from the first coil. When the moveable part oscillates under external disturbances, an electromotive force is induced in the coil, and this provides a damping force. Because the electromotive force is produced in the short circuit coil separately from that of the drive coil, the damping force may be targeted only to specific disturbances. If the input impedance of the drive circuit is high, because substantially no effective electromotive force is produced in the drive coil, the drive property of the drive coil and the damping property of the short circuit coil can be designed without interfering with each other. Therefore, this arrangement is particularly favorable in such applications as onboard laser radars which are actuated at a fixed frequency and subject to external vibrations of a predicted frequency range. Because an LC resonance circuit is formed jointly by the short circuit coil and the other coil and capacitor connected to the short circuit coil, the resonance frequency can be designed at will.

A resonance frequency of the electric resonance circuit formed by the first coil and second coil may substantially agree with a spring mass system of the actuator, and a drive frequency of the actuator may be substantially lower than the resonance frequency of the spring mass system. Thereby, when the moveable part has displaced under external disturbances, an electromotive force is induced in the second coil, and the associated resonance occurs at a substantially higher frequency than the drive frequency. Therefore, when the drive frequency is substantially lower than the external vibrations, the damping effect is directed only to the external vibrations, and does not substantially affect the drive property.

In particular, if the actuator is configured to be used in an onboard equipment, the frequency range of external vibrations can be predicted to a certain extent, and the actuator can be easily designed so as to control the oscillation of the moveable part under such external vibrations.

### EFFECT OF THE INVENTION

Thus, according to the present invention, the coil can be designed in such a manner that the vibration damping action of the electromotive force induced in the coil as a result of the oscillation of the moveable part under external disturbances may be effectively targeted at the resonance frequency of the spring mass system, and the vibration attenuating effect against external vibrations can be optimized.

In particular, by connecting an accessory coil in parallel to the drive coil, the drive coil may be designed so as to provide a required drive property while a resonance circuit can be formed by the accessory coil so as to have a substantially same resonant frequency as external vibrations of specific disturbances. When the input impedance of the drive circuit is high, no effective electromotive force is induced in the drive coil. However, an electric resonance circuit can be formed jointly with the accessory coil, and the resonance frequency can be selected at will. By connecting a capacitor to the accessory coil so as to jointly form a resonance circuit, the resonance circuit can be formed by the accessory coil and capacitor so as to have a specific electric resonance frequency without any difficulty, and the freedom in the design can be enhanced even further.

Also, by providing a short circuit coil separately from the drive coil, the magnitude of the electromotive force induced in the short circuit coil by the oscillation of the moveable part and the resonance frequency of the short circuit coil can be freely determined, even when the input impedance of the drive circuit is high and substantially no effective electromotive force is induced in the drive oil, the electromotive force induced in the short circuit coil can provide an adequate vibration attenuating effect. Therefore, an effective damping force can be obtained without regard to the configuration of the drive circuit. The short circuit coil may be arranged on a same place as the drive coil so that the addition of the short circuit coil does not require any substantial modification to the existing design.

Furthermore, by connecting a coil and a capacitor to the short circuit coil so as to form a resonance circuit whose impedance reduces to zero at the same frequency as that of a specific external vibration, the actuator design may be optimized in such a manner that a maximum damping force may be obtained when the moveable part is displaced by an input of an external vibration of such a frequency.

The magnetic actuator of the present invention is particularly suitable for use in an onboard equipment because the frequency range of external vibrations in such an application can be predicted to a certain extent.

### DETAILED DESCRIPTION OF THE PREFERRED EMBODIMENTS

Now the present invention is described in the following in more detail in terms of concrete embodiments with reference to the appended drawings.

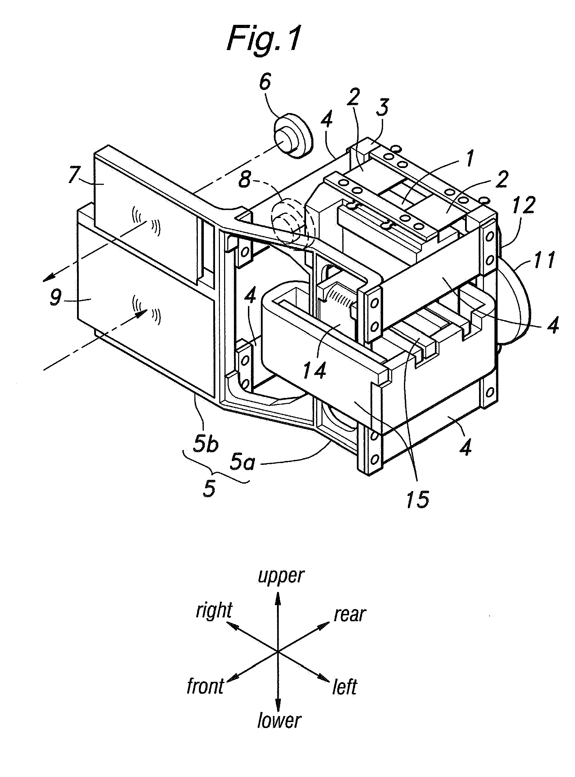

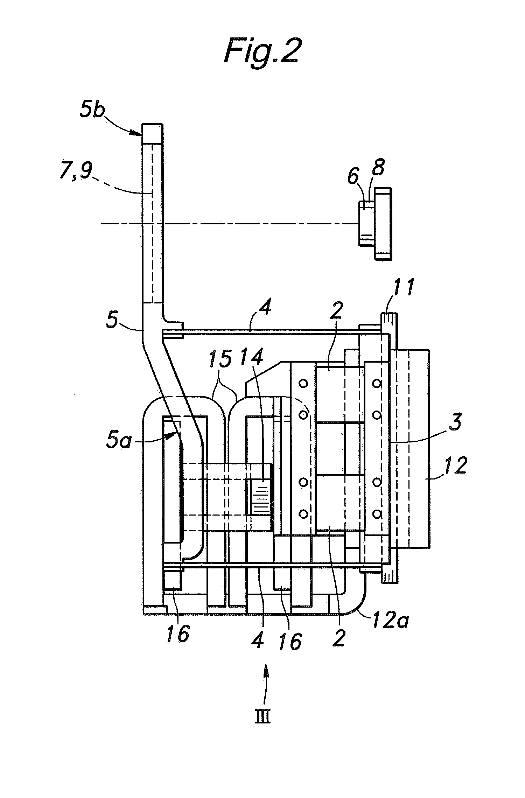

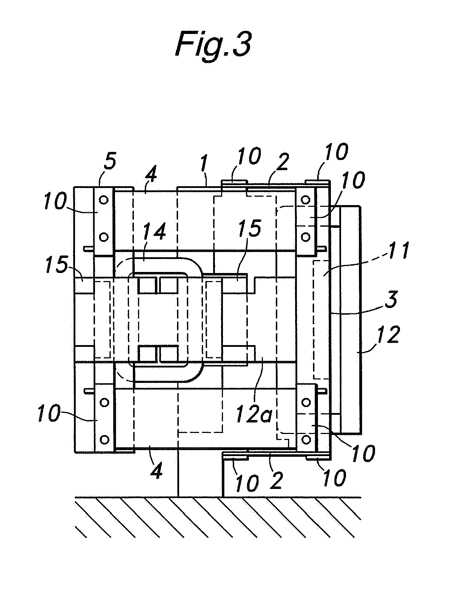

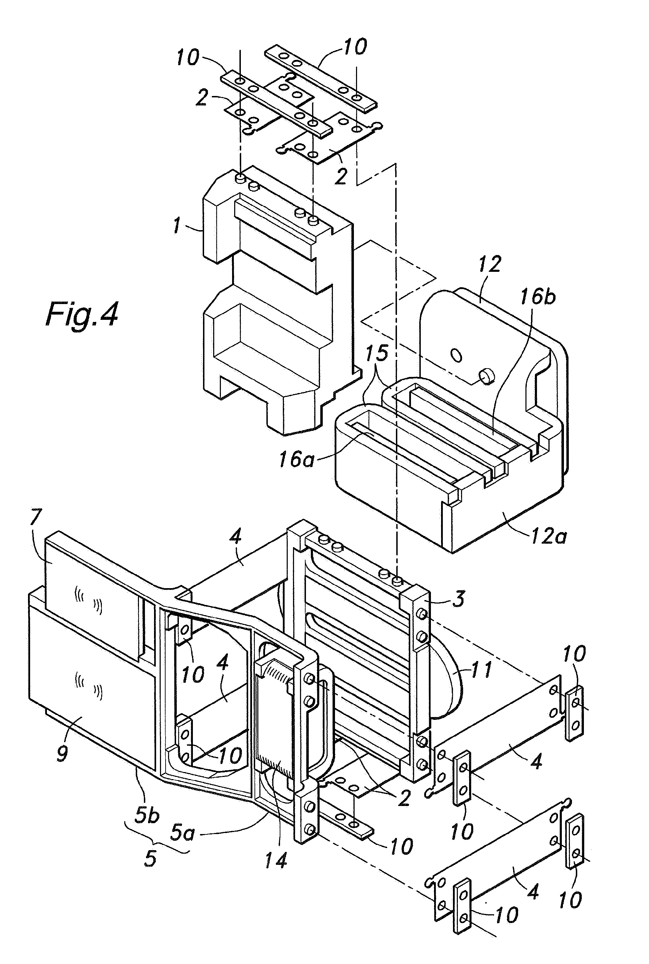

Figure 1 is a perspective view showing a laser beam scanning actuator for use in an onboard laser radar device for preventing a vehicle crash. Figure 2 is a plan view of the onboard scanning laser radar device, Figure 3 is a side view as seen from arrow III in Figure 2, and Figure 4 is an exploded perspective view of the essential components of the actuator. In this onboard scanning laser radar device, the front, rear, upper, lower, left and right directions are defined as indicated by arrows in Figure 1, and, in the following description, the actuator is mounted on the vehicle in such an orientation that the front and rear directions correspond to the fore-and-aft direction of the vehicle.

This onboard scanning laser radar device comprises a fixed part consisting of a fixed base 1 which is fixedly secured to a vehicle body (frame) not shown in the drawings, a coil support member 3 consisting of a rectangular frame (moveable support portion) supported by two pairs of sheet springs 2 (cantilever means) extending from the fixed base 1 for vertical displacement, and a lens holder 5 (moveable portion) supported by two pairs of sheet springs 4 extending from the coil support member 3 for lateral displacement. The lens holder 5 is integrally provided with a scanning lens 7 for transmitting the light emitted from a laser diode 6 (emitting means) and a light receiving lens 9 for converging the light reflected from an object onto a light receiving photodiode 8.

The two pairs of sheet springs 2 for vertical displacement are secured to upper and lower ends of a vertical (in the sense of the drawings) wall of the base 1 at their base ends, respectively, and extend rearward in mutually parallel relationship. The free ends of the sheet springs 2 for vertical displacement are attached to side parts of the upper and lower ends of the coil support member 3. The deflection of the sheet springs 2 are allowed only in such a direction as the configuration of the sheet springs permits. Therefore, the sheet springs 2 can be made to deflect only in the vertical direction in the sense of the drawings, and the coil support member 3 can be constrained to move only in the vertical direction with respect to the fixed base 1 without requiring any special guide means.

In the illustrated embodiment, the moveable part consists of the lens holder 5, and the fixed part with respect to the lens holder 5 may be considered as consisting of the coil support member 3. In that case, the absolute movement of the lens holder 5 with respect to the fixed base 1 occurs both vertically and laterally. If the coil support member 3 is considered as the fixed part, the relative movement of the lens holder 5 with respect to the coil support member 3 occurs only in the lateral direction.

The base 1 and coil support member 3 may be made of plastic material. In the illustrated embodiment, a pair of openings are formed in each longitudinal end of each sheet spring 2 for vertical displacement, and the corresponding projections are formed in the corresponding part of the base 1 or the coil support member 2, as the case may be. The projections are fit into the corresponding openings of the sheet spring and openings of a holding plate 10 so that the corresponding end of the sheet spring is securely attached to the opposing component. This arrangement simplifies the assembly work. These components can be made even more simple by means of an insert molding process using the sheet springs as inserted components. Such an arrangement permits the assembly work to be conducted in a both simple and highly precise manner.

The four sheet springs 4 for lateral displacement extend forward beyond the base 1 in a mutually parallel relationship with their major surfaces facing laterally in the sense of the drawings, and are each provided with a base end fixed to a corresponding side part of the frame of the coil support member 3. The free end of each sheet spring 4 for lateral displacement is fixedly attached to a corresponding part of the lens holder 5. Thereby, the four sheet springs 4 for lateral displacement are permitted to deflect only in the lateral direction as seen in the drawings so that the lens holder 5 is supported by the base 1 in a laterally moveable manner. The mode of fixedly securing each end of each sheet spring 4 for lateral displacement to the corresponding part (lens support member 3 or lens holder 5) is similar to what was described earlier. The holding plates 10 may be different from each other in shape, but are all denoted with the same numeral.

According to this layout, the lens holder 5 is supported by the base 1 via the sheet springs 2 and 4 so as to be moveable in both vertically and laterally moveable manner. Because the sheet springs 2 for vertical displacement extend rearward from the base 1 and the sheet springs 4 for lateral displacement extend forward from the coil support member 3 beyond the base 1, the sheet springs 4 for lateral displacement are longer than the sheet springs 2 for vertical displacement. In other words, the range of movement of the lens holder 5 (lenses 7 and 9) is greater for lateral displacement than for vertical displacement. This is because the onboard radar is required to scan a broader range laterally than vertically for the purpose of detecting an obstacle located ahead of the vehicle.

The lens holder 5 is provided with a connecting portion 5a to which the free ends of the sheet springs 4 for lateral displacement are attached and a lens retaining portion 5b retaining the lenses 7 and 9, and is formed as an integrally molded plastic member having the connecting portion 5a and lens retaining portion 5b disposed laterally one next to the other. The lenses 7 and 9 of the illustrated embodiment consist of Fresnel lenses which are light in weight and compact in size, but may also consist of lenses of other types.

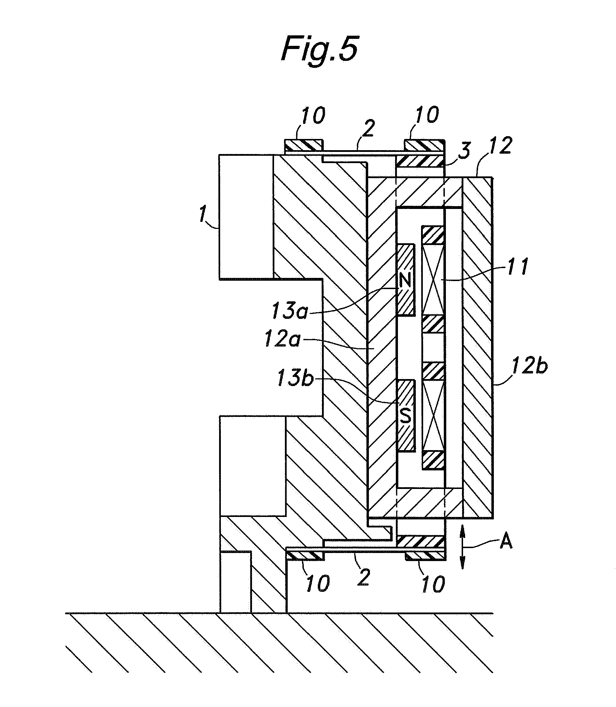

Next is described the drive means for driving the lens holder 5 in vertical and lateral directions. The coil support frame 3 is fixedly provided with a vertical drive coil 11 having a shape of a laterally elongated track. As shown in Figure 5 also, a yoke 12 that forms a magnetic circuit jointly with the vertical drive coil 11 is fixedly attached to the rear surface of the upright wall of the base 1 so as to surround the vertical drive coil 11 around the long axis thereof. The yoke 12 may be joined with the base 1 by fitting a projection into a corresponding recess. The yoke 12 is provided with a pair of walls 12a and 12b interposing the vertical drive coil 11 therebetween. To one of the walls 12a (the wall adjacent to the base 1 in the illustrated embodiment are attached a pair of permanent magnets 13a and 13b one above the other which present mutually opposite magnetic poles toward the coil 11. The yoke 12 and magnets 13a and 13b form a magnetic circuit that interposes the vertical drive coil 11.

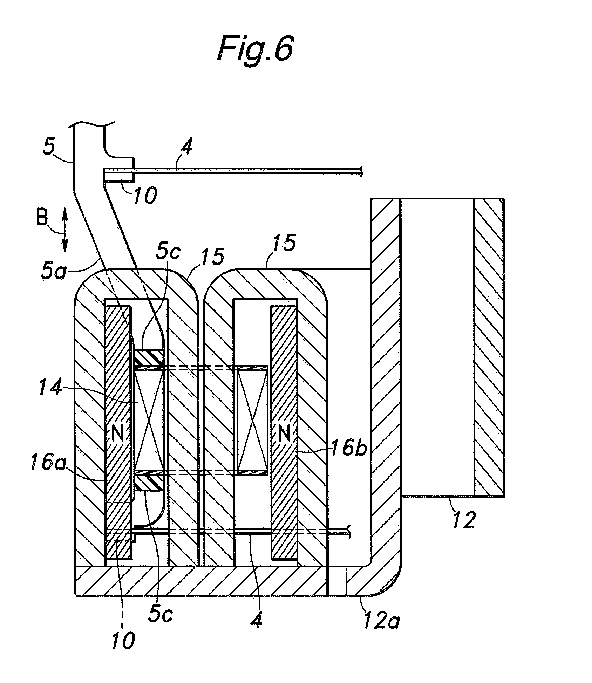

As shown in Figure 6 also, the connecting portion 5a of the lens holder 5 is provided with a pair of support frames 5c each extending vertically immediately inwardly of the corresponding sheet springs 4 for lateral displacement. Between the two support frames 5c is interposed a drive coil 14 for lateral displacement having a shape of a vertically elongated track. A pair of U-shaped yokes 15 forming a magnetic circuit jointly with the lateral drive coil 14 are disposed one next to the other in a spaced relationship and in a symmetric relationship with respect to the axial center line of the lateral drive coil 14. The coils 11 and 14 may be formed by insert molding in a similar manner as the sheet springs, and this allows the assembly work to be performed in a highly precise manner similarly as the case of the sheet springs. Such a benefit can be even more enhanced if both the sheet springs and coils are insert molded.

The open end of each U-shaped yoke 15 is closed by an L-shaped extension 12a integrally formed with the yoke 12 mentioned earlier, and the L-shaped extension 12a additionally integrally supports the U-shaped yoke 15 to the yoke 12. To the inner surface of one of the legs of each U-shaped yoke 15 (the leg located outside of the lateral drive coil 14 in the illustrated embodiment) is fixedly attached a permanent magnet 16a, 16b having a same magnetic pole facing the lateral drive coil 14. Thus is formed a magnetic circuit (yokes 15 and magnets 16a and 16b) that cooperate with the lateral drive coil 14.

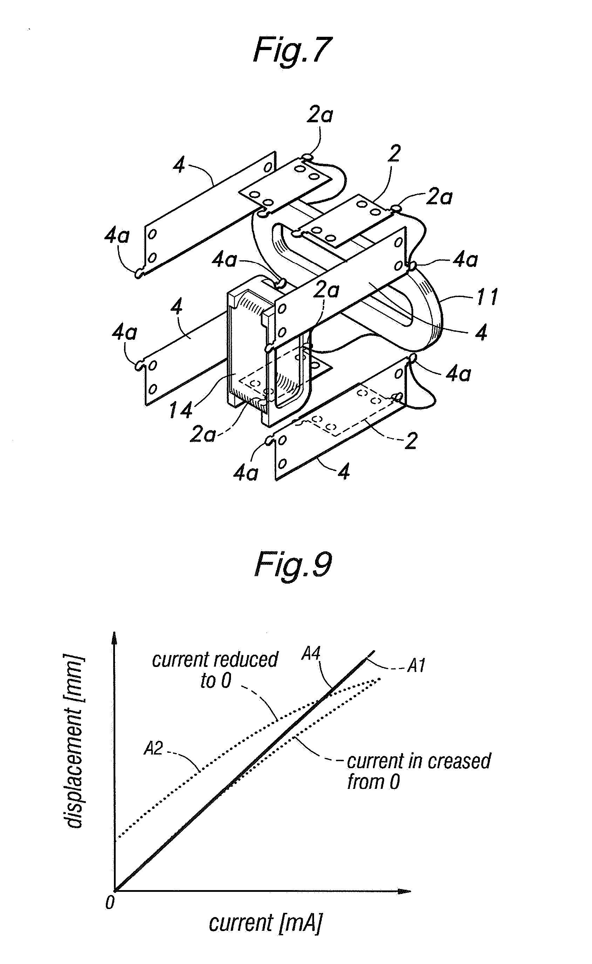

In the illustrated embodiment, each coil 11, 14 is electrically connected to an external drive circuit (not shown in the drawings) via the corresponding sheet springs 2, 4 as shown in Figure 7. Therefore, the sheet springs 2 and 4 are made of electroconductive spring material, and each sheet spring 2, 4 is provided with a pair of terminals 2a, 4a on either longitudinal end thereof. Each terminal 2a, 4a is exposed when the corresponding sheet spring is assembled to the base 1, coil support frame 3 and lens holder 5, as the case may be.

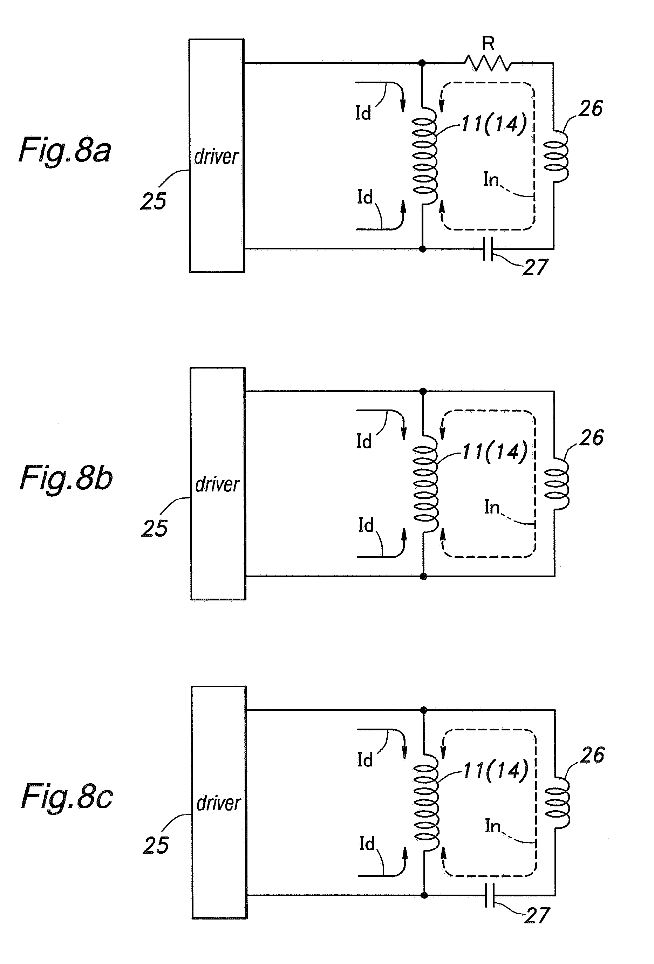

One of the terminals 2a of one of the four sheet springs 2 on the side of the base 1, for instance, is connected to the external drive circuit (driver 25 in Figure 8) via an output terminal thereof and a lead wire. The terminals 2a of two of the four sheet springs 2 remote from the base 1 are connected to the two ends of the coil wire of the vertical drive coil 11. The terminals 2a of the other two of the four sheet springs 2 remote from the base 1 are connected to the terminals 4a of the corresponding two of the lateral sheet springs 4 via lead wires, respectively. The terminals 4a of these two sheet springs 4 remote from the coil support member 3 are connected to the two ends of the coil wire of the lateral drive coil 13, respectively.

By thus forming the drive means, the coil support member 3 can be vertically displaced with respect to the base 1 as indicated by arrow A in Figure 5 by changing the direction of the electric current conducted through the vertical drive coil 11 as illustrated in Figure 8. Similarly, by changing the direction of the electric current conducted through the lateral drive coil 14, the lens holder 5 can be laterally displaced with respect to the coil support member 3 and hence the base 1 as indicated by arrow B in Figure 6.

The cantilever means in the illustrated embodiment is formed by connecting the fixed base 1 with the lens holder 5 serving as a moveable part via the sheet springs 2 and 4, but may also be formed by using wire springs, instead of sheet springs, for directly supporting the lens holder 5 on the base 1 in the manner of a cantilever. The mass-spring system of the illustrated embodiment is thus formed by the sheet springs 2 and 4 and the various components (such as the lens holder 5, coil support member 3 and coils 11 and 14) that are moveable supported by the springs 2 and 4.

When such a magnetic actuator is mounted on a vehicle, external disturbances cause displacements in the coil support member 3 and lens holder 5 particularly at the resonance frequency of the spring mass system of the magnetic actuator. When the external vibrations are such that the magnetic actuator receives forces that are directed to the direction of the actuation, the control of the magnetic actuator in such a direction may involve some difficulty. Therefore, it is necessary to dampen the motions of the coil support member 3 and lens holder 5 when they are subjected to such external vibrations. It is possible to adjust the magnitude of the damping action owing to the induced electromotive force by suitably selecting the configurations, wire diameters, number of turns and material of the vertical drive coil 11 mounted on the coil holder 3 and the lateral drive coil 14 mounted on the lens holder 5. The external disturbances may consist of a step-wise input, resonant vibrations of the vehicle body and so on.

Now is described an embodiment which provides a high damping effect against external vibrations of a certain targeted frequency. A first example of an electric circuit for driving the magnetic actuator of the present invention is illustrated in Figures 8a, 8b and 8c. A pair of output terminals of an external driver (drive circuit) 25 are electrically connected to the two ends of the coil 11, respectively, via the sheet springs 2, and the two ends of the coil 14, respectively, are also similarly connected to an external driver circuit via the sheet springs 4. When electric current Id is supplied from the driver 25 to the sheet springs 2 for driving (scanning) the lens holder 5, the coil 11 is energized via the sheet springs 2, and electromagnetic force corresponding to the direction of the flow of the electric current is produced so that the coil support member 3 or the lens holder 5 (lenses 7 and 9) is displaced in a corresponding manner. The following description is directed to the vertical drive coil 11. As a similar description is equally applicable to the lateral drive coil 14, such description is omitted in the following description.

Referring to Figure 8a, the first embodiment includes an accessory coil 26 which is connected in parallel with the drive coil 11. The accessory coil 26 may be attached to a fixed part, and electrically connected to the drive coil 11, but may also be attached to a moveable part. One end of the accessory coil 26 is connected to an end of the coil 11 via a capacitor 27 and the other end thereof is connected to the other end of the coil 11 via a resistor R1 so that the accessory coil 26 forms a part of a LCR resonance circuit. The resonance frequency of this circuit can be suitably selected by changing the properties of the various components. When the accessory coil 26 is to be mounted on a moveable part, a part of the moveable part relatively free from the influences of the magnetic circuit should be selected for mounting the accessory coil.

In the illustrated onboard laser radar device, in operation, a prescribed alternating current Id is supplied to the drive coil 11 so that the coil support member 3 or lens holder 5 may be oscillated at a prescribed amplitude and frequency (1Hz, for instance). With respect to the illustrated embodiment, it is assumed in the following description that the resonant frequency of the moveable part or the resonant frequency of the spring mass system is about 40 Hz.

When subjected to external disturbances, the moveable part (lens holder 5 and coil support member 3) is subjected to an external force tending to move the moveable part in a certain direction, and the resulting movement of the coil 11 within the magnetic circuit induces an electromotive force in the coil 11. The current In caused by this electromotive force alternately changes direction as indicated by the broken line in the drawing, and this produces an electromagnetic force in the coil 11 which is opposite in direction to that caused by the external disturbances.

Because the coil 11 moves within the magnetic circuit formed by the corresponding yoke 12 and magnets 13a and 13b, the electromagnetic force produced in the coil 11 opposes the movement of the moveable part (lens holder 5 and coil support member 3) caused by the external disturbances, and this provides a damping action against the external disturbances. The higher the frequency (speed) is and the greater the amplitude of the movement is, the greater is this damping force. The drive frequency of the illustrated embodiment is about 1 Hz, and is typically no more than about 10 Hz in applications of onboard laser radar devices. On the other hand, the resonant frequency of the spring mass system (resonant frequency of the moveable part) is substantially higher than such frequencies. Therefore, by suitably selecting the electric resonant frequency, it is possible to produce a high damping force in a frequency range near the resonant frequency of the spring mass system, and produce substantially no damping force in the substantially lower drive frequency range so that the drive property may be kept substantially free from interferences.

The resonance circuit illustrated in Figure 8a consisted of an LCR resonance circuit having a capacitor 27 and a resistor R connected to an accessory coil 26, but may also consist solely of an accessory coil 26 as illustrated in Figure 8b or an accessory coil 26 and a capacitor 27 connected thereto as illustrated in Figure 8c. The damping effects of these electric resonance circuits are similar to that of the embodiment described above. By using such simple resonance circuits, as long as the electric resonance frequency can be properly determined, such benefits as the simplification of the circuit structure, a compact design of the actuator and a low manufacturing cost can be gained.

The impedance of any of the above described resonance circuits becomes zero at a specific frequency as a result of electric resonance. The impedance decreases progressively as the frequency moves away from this resonance frequency. Therefore, by coinciding this electric resonance frequency with the resonance frequency of the spring mass system, when the system is oscillated by external disturbances, electric current owing to the electromotive force is generated in the circuit even though the driver is not supplying any electric current to the coil, and this provides a strong damping force that opposes the movement of the moveable part particularly in the frequency range near the spring mass resonant frequency. When the frequency of the external vibration that is desired to be damped deviates substantially from the drive frequency range, by selecting the electric resonance frequency in a range that provides an effective damping action to the frequency of the external vibration, the system can be tuned in such a manner that a favorable damping property can be achieved without interfering with the drive property of the system.

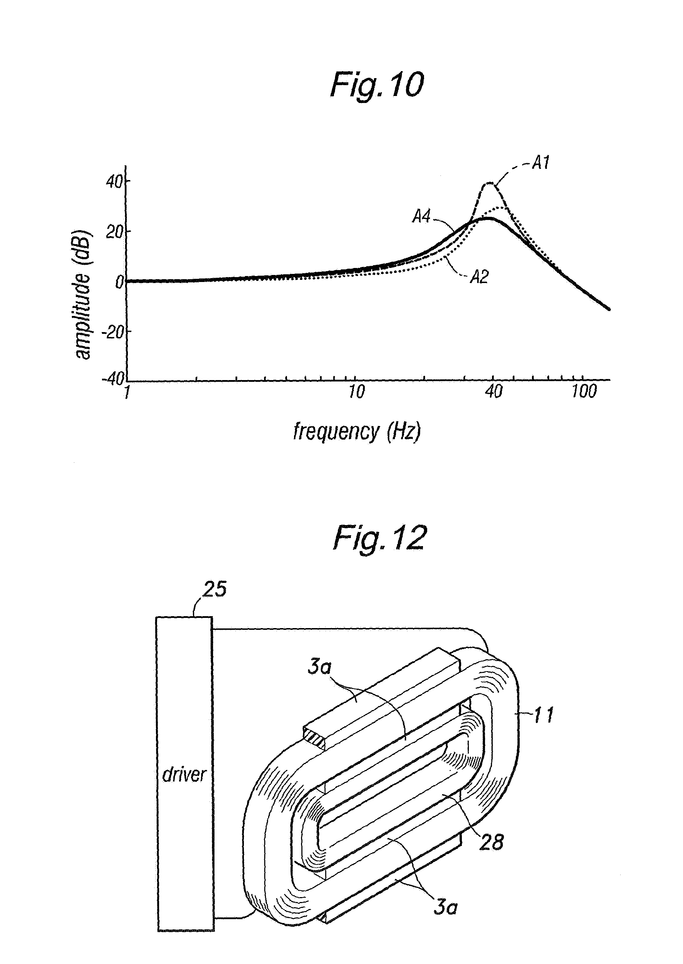

Figure 9 shows a current/displacement property of the actuator (A4) of the first embodiment when a circuit including an accessory coil of 4.2 mH, a capacitor 27 of 5 mF and a resistor R of 100Ω was connected to the actuator and the system was actuated in a DC mode. Figure 10 shows the frequency response of the system when a sine wave having a frequency range swept from 1 to 100 Hz was applied as an external vibration without conducting any drive current through the coil. For comparison, Figures 9 and 10 show the frequency responses and current/displacement properties of actuators A1 and A2 when they were subjected to external vibrations with drive current supplied from the driver to the coils, respectively, the broken lines corresponding to the actuator A1 and the dotted lines corresponding to the actuator A2.

When the drive frequency significantly deviates from the frequency of the external vibration (spring mass resonant frequency) that is desired to be damped, even though the electric resonance circuit including the accessory coil 26, capacitor 27 and resistor R illustrated in Figure 8 is connected to the system, the circuit does not provide a damping action to the driven movement of the actuator. Therefore, there is substantially no difference in the properties of the actuator (hysteresis) when the supplied current is progressively increased from zero and when the supplied current is progressively reduced to zero in driving the actuator as indicated by the solid line (A4) in Figure 9. In this regard, the actuator of the illustrated embodiment distinctly differs from the conventional actuator A2 (the dotted lines in Figure 8) having a viscoelastic material attached to the spring member thereof. This also means that the actuator A4 is less susceptible to the influences of temperature on the property thereof. Also, as illustrated in Figure 10, owing to the action of this circuit, even when the driver is not in operation, this circuit provides a damping action similar to that can be obtained from the actuator A2 in which the driver is allowed to conduct electric current through the coil. It means that the damping effect does not depend on the operating state of the driver 25 so that a favorable result can be obtained when the internal resistance of the driver is high. In the circuit illustrated in Figure 8a, the magnitude of the damping force can be adjusted by changing the resistive value of the resistor R.

By coinciding the electric resonant frequency of the circuit including an accessory coil 26 and a capacitor 27 which are connected in parallel to the drive coil 1 as illustrated in Figure 8a with the frequency of an external vibration, it is also possible to achieve an opposite of what was described above (to provide no damping effect when an external vibration of a drive frequency range is received, and provide a damping effect in other frequency ranges). Thereby, a damping effect is avoided in the drive frequency range so that a favorable and efficient drive property can be obtained on the one hand and a favorable damping property can be obtained with regard to external vibrations of other frequency ranges on the other hand.

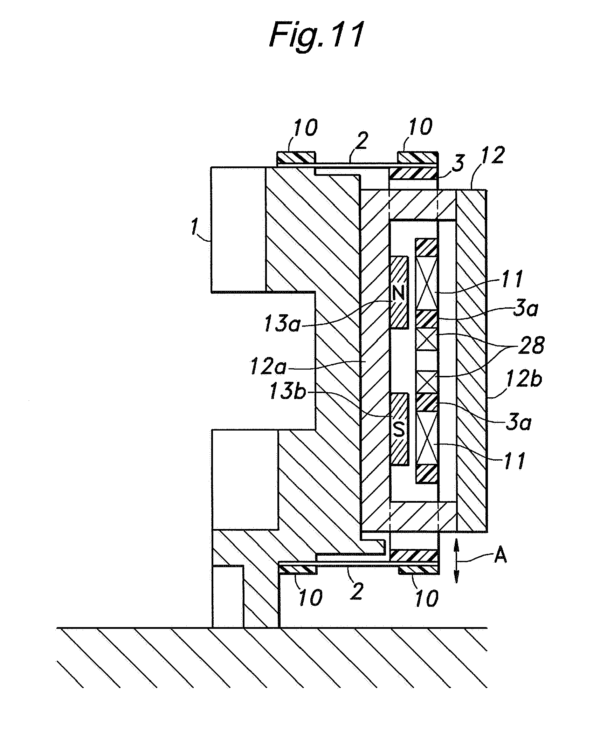

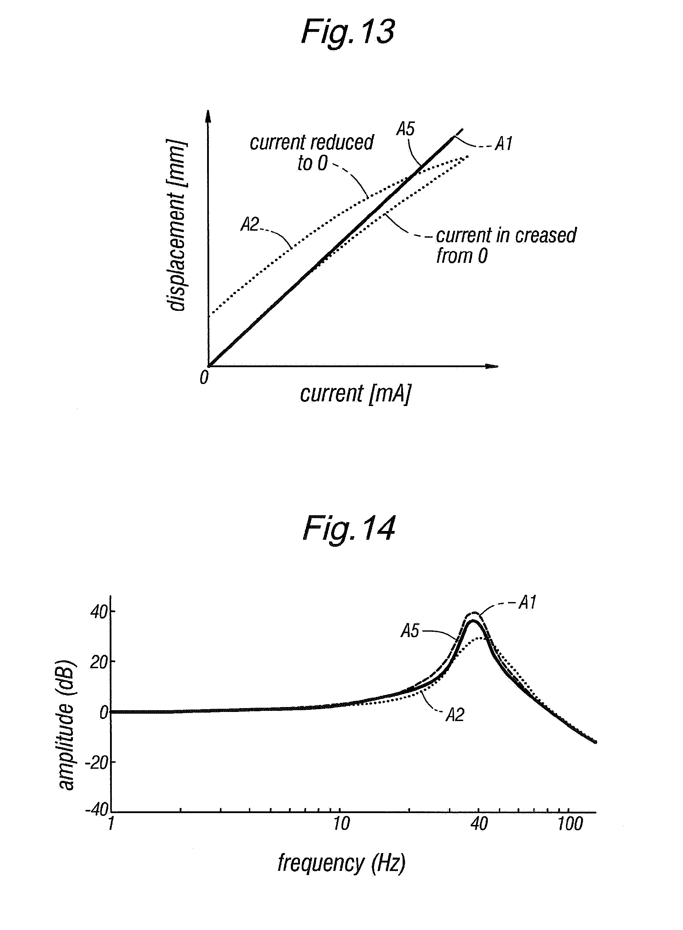

Next is described a second embodiment incorporated with a means for providing a damping effect against external vibrations according to the present invention, in connection with the vertical drive coil 11 similarly as the foregoing embodiment, with reference to Figures 11 and 12. Figure 11 is similar to Figure 5 and like parts are denoted with like numerals in Figure 11 without repeating the description of such parts. In the second embodiment, a short circuit coil 28 serving as a second coil is provided inside the coil 11 so as to be surrounded thereby by using coil bobbins 3a formed in the coil support member 3 which supports the coil 11. The short circuit coil 28 lies substantially on the same place as the coil 11 with respect to the longitudinal direction so that the short circuit coil 28 would not project from the coil support member 3 and this reduces the possibility of causing interferences in the mounting space.

Figure 13 shows a current/displacement property of the actuator (A5) of the second embodiment when a circuit including a drive coil 24 of 400 turns and a short circuit coil 28 of 260 turns is connected to the actuator and the system is actuated in a DC mode. Figure 13 shows the frequency response of the system when a sine wave having a frequency swept from 1 to 100 Hz was applied as an external vibration without conducting any drive current through the coil. For comparison, the frequency responses and current/displacement properties of actuators A1 and A2 when the systems were subjected to external vibrations with drive current supplied from the driver to the coils are shown in Figures 13 and 14, respectively, the broken lines corresponding to the actuator A1 and the dotted lines corresponding to the actuator A2.

As shown in Figure 13, when the drive frequency deviated significantly from the frequency of the external vibration which is desired to be controlled, the short circuit coil 28 did not produce any damping effect when driving the coil 11, and there was no hysteresis. Temperature changes did not affect the drive property. Meanwhile, as shown in Figure 14, when an external vibration was received and the driver was not in operation, the short circuit coils produced a substantially same damping force as the actuator A2 which allowed the driver to supply electric current to the coil. Therefore, this embodiment is also suitable for use with a driver 25 having a relatively high internal resistance.

Because the damping effect can be freely determined by changing the configuration of the short circuit coil 28 (such as the shape of the coil, wire diameter, number of turns and material of the coil wire), the damping properly is not affected by the property of the driver as compared to the actuator which relies on the drive coil for the damping effect. Furthermore, as there is no need to consider the damping action of the drive coil, the freedom in the design of the drive coil can be increased.

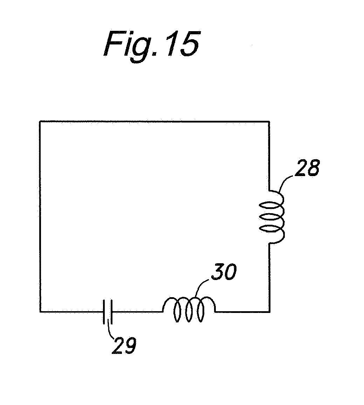

Figure 15 shows a third embodiment comprising means for enhancing the damping effect against external vibrations according to the present invention with respect to the vertical drive coil similarly as the preceding embodiments. In the third embodiment, an accessory coil 30 and a capacitor 29 are connected to a short circuit coil 28 similar to that of the second embodiment. The way the accessory coil 30 is connected is similar to that of the second embodiment. According to this arrangement, similarly as the second embodiment, as the moveable part moves in response to external disturbances, an electromotive force is induced in the short circuit coil 28, and provides a damping action. By suitably selecting the accessory coil 30 and capacitor 29, the electric resonance frequency can be easily and freely determined, and the range of application of the magnetic actuator can be expanded.

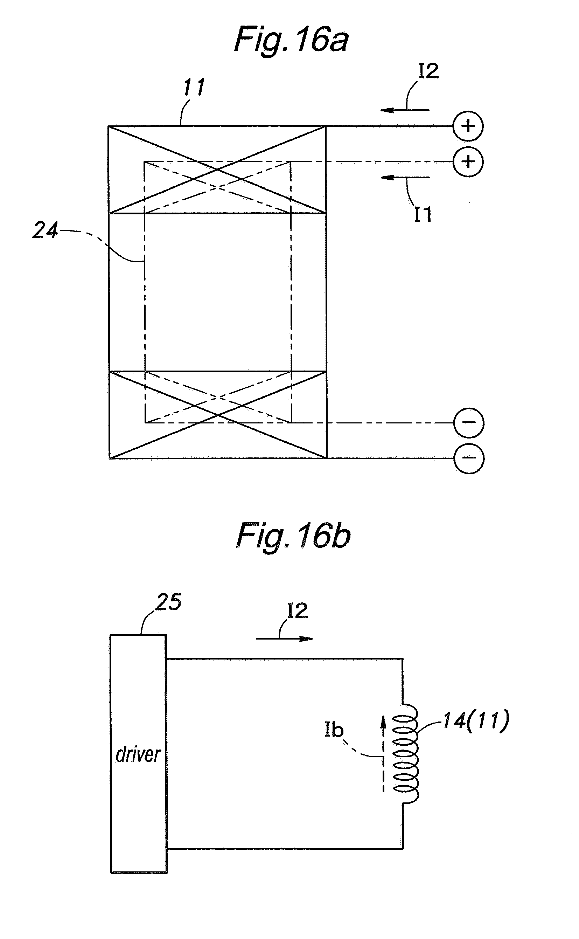

The damping action of the drive coil 11 can also be used, and such an embodiment is described in the following. Suppose that the vertical thrust (drive force) of the lens holder 5 is 2.7 N, for instance. A reference coil 24 is indicated by imaginary lines in Figure 16a. The reference coil 24 consists of a coil designed in such a way that the prescribed thrust of the magnetic actuator can be achieved with a minimum size and weight. When this coil was formed by winding a coil wire of 0.16 mm diameter by about 250 turns, it weighed about 5 grams and a thrust of 2.7 N was obtained by supplying a drive current I1 of 300 mA. The overall damping factor of the system when such a reference coil was used was about 0.24 when a drive circuit (driver 25) having an extremely small internal resistance was connected thereto.

On the other hand, a somewhat larger vertical drive coil 11 was obtained by winding a coil wire of 0.16 mm diameter by about 460 turns as illustrated in Figure 16a, and it weighed 10.3 grams. Because the number of turns is greater, even though the supplied drive current I2 was reduced to 165 mA, the same thrust of 2.7 N was obtained. The overall damping factor of the illustrated vertical drive coil 11 was 0.4 when it was connected to a drive circuit having an extremely small internal resistance.

By thus increasing the number of turns as compared to the reference coil 24, the same thrust can be obtained. The weight of the coil increases, but the electromagnetic damping force resulting from the induced electromotive force and hence the damping can be increased. Therefore, it becomes possible to ensure an adequate drive force for scanning the magnetic actuator and to minimize the displacement of the coil support member 3 when it is subjected to external vibrations owing to the relatively large damping factor. Therefore, a favorable scanning drive property can be achieved according to the illustrated embodiment by minimizing the influences of external vibrations on the light emitting and receiving control of the onboard laser radar device.

In operation, when electric current 12 was supplied from the driver 25 to the sheet springs 2 for driving (scanning) the actuator as illustrated in Figure 16b, the coil 11 was energized via the sheet springs 2 and a magnetic force corresponding to the direction of the electric current was produced so that the coil support member 3 was actuated (the lens holder 5 supporting the lenses 7 and 8 would be actuated if the coil 14 were energized via the sheet springs 4). In the case of the illustrated onboard laser radar device, the coil support member 3 was angularly reciprocated at a prescribed stroke and a frequency (1 Hz, for instance).

On the other hand, when subjected to external disturbances, the moveable part (lens holder 5 and coil support member 3) was displaced in the direction dictated by the direction of the external disturbances, and the coil 11 moved within the magnetic circuit in a corresponding manner. As a result, an electromotive force was produced in the coil 11, and the resulting current Ib that flowed through the coil 11 as illustrated in Figure 16b produced an electromagnetic force that provided a thrust opposing the external vibrations. This provided a favorable damping action that favorably controled the movement of the moveable part (lens holder 5 and coil support member 3) caused by the external vibrations. The greater the damping action, the higher the frequency of oscillation (or the speed of movement) and the greater the amplitude is. Because the drive frequency is 1 Hz in the illustrated embodiment, and is typically no more than about 10 Hz in the applications of onboard laser radar devices, movement of such low frequencies will not receive any substantial damping action, and the drive movement of the actuator is not substantially affected by the damping action.

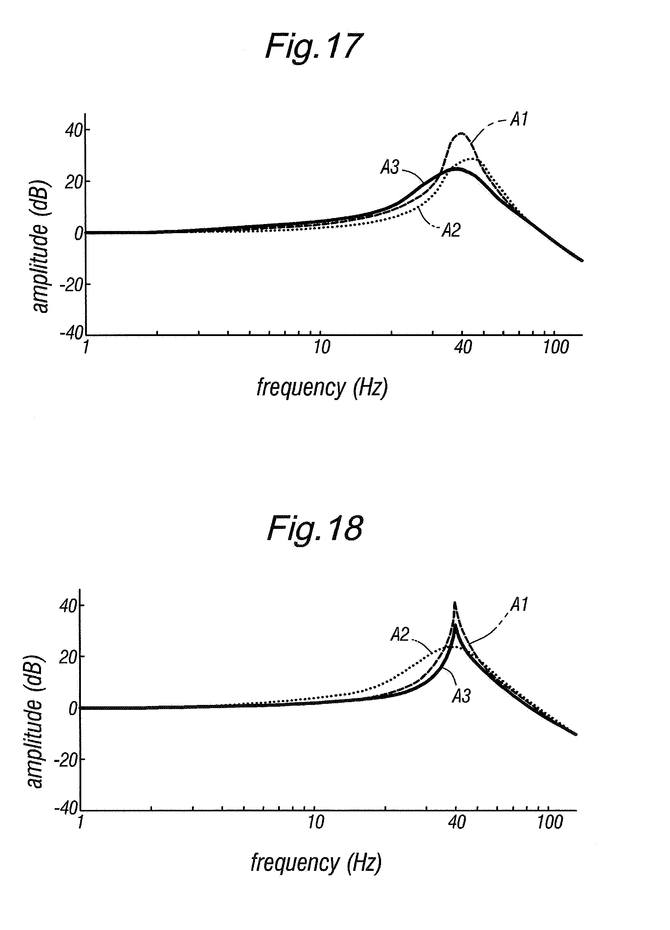

Figures 17 and 18 show frequency responses of the actuator (A1) fitted with a normal coil (such as the reference coil 24) having a relatively small number of turns, the actuator (A2) having viscoelastic material applied to the spring members in the conventional manner and the illustrated actuator (A3) of the present invention which is optimized with respect to the shape, wire diameter, number of turns and material of the coil (such as the vertical drive coil 11) so as to provide a maximum damping when subjected to external disturbances. Figure 17 corresponds to the case where the coil 11 was configured to be energized by the external vibration in the form of a sine wave whose frequency was swept from 1 to 100 Hz was applied to the actuator as well as by the driver 25, and Figure 18 corresponds to the case where external vibration in the form of a sine wave whose frequency was swept from 1 to 100 Hz was applied to the actuator.

When the conventional actuator (A1) receives external disturbances while the driver is activated (to enable energization of the coil), in the case of the illustrated example, the frequency response demonstrates a large amplitude around 40 Hz which corresponds to the resonant frequency of the spring mass resonant frequency as indicated by the broken lines in Figure 17. If this amplitude is desired to be reduced, it can be accomplished by applying viscoelastic material to the springs of the actuator A1 (conventional actuator A2) and obtain a frequency response as indicated by the dotted lines in Figure 17. However, the use of viscoelastic material affects the frequency response of the actuator when it is being driven as indicated by the dotted lines in Figure 18.

On the other hand, according to the actuator A1, the coil can be optimized by suitably selecting the shape, wire diameter, number of turns and material of the coil so as to produce a large damping force against external vibrations of the same frequency as the spring mass resonance frequency. Therefore, even without using viscoelastic material, the amplitude when subjected to external disturbances can be reduced substantially to the level of the conventional actuator A2 as indicated by the solid lines in Figure 17. Because the frequency response when the actuator is being driven is not damaged by the use of viscoelastic material, the frequency response when the actuator is being driven can be reduced to a substantially same level as the conventional actuator A1 as indicated by the solid lines in Figure 18. It suffices if the coil is optimized in such a manner that a large electromotive force is produced and a large damping force is obtained near the spring mass resonance frequency, and does not require the frequency at which a large damping force is to be produced to be equal to the spring mass resonance frequency.

As can be appreciated from the foregoing description, in a magnetic actuator having a relatively low drive frequency range and a relatively high spring mass resonant frequency, by forming the drive coil so as to demonstrate a high damping factor, instead of a compact and light-weight structure, a damping effect is produced only against external disturbances when the actuator is subjected to such external disturbances. Because a low frequency displacement produces very little electromotive force, the frequency response of the damping force is such that little damping force is produced in the drive frequency range, and the drive property of the actuator remains intact. Also, owing to the elimination of the need to attach viscoelastic material to the springs, such adverse influences as the influences of temperature changes, reduction in responsiveness and hysteresis in the drive property can be avoided, and the reduction of the number of component parts contributes to the reduction of the manufacturing cost.

The circuits discussed above demonstrate a zero impedance at a particular frequency of electric resonance. As the frequency moves away from the resonant frequency, the impedance progressively increases. Therefore, as is often the case with the onboard applications, if the spring mass resonance frequency substantially differs from the drive frequency, the electric resonance frequency of the circuit may be made to agree with the spring mass resonant frequency so that the electromotive force is generated only at the particular frequency and provides a damping effect on the movement of the moveable part even when the driver is not in operation, and does not provide a damping effect on the driving action of the actuator.

Because the frequency property can be adjusted by changing the values of the accessory coil 26 and capacitor 27 or the values of the short circuit coil 28 and the capacitor 29, when an accessory coil and/or a short circuit coil is used, it can produce a favorable damping effect without being interfered by the property of the drive coil, and the freedom in the design of the drive coil can be increased. As the values of the accessory coil 26, capacitor 27 of the values of the short circuit coil 28 and capacitor 29 can be individually selected, the freedom in the design with regard to the changes in the thrust and damping force increases, and the actuator can be adapted to various applications.

The actuator can be used in environments which involve significant external vibrations owing to the favorable damping effect produced against such external vibrations. Furthermore, such a damping effect is directed only to external disturbances, and does not affect the drive property of the actuator.

The directions of the movement of the moveable part were in both lateral and vertical directions in the foregoing embodiment, but may also be around suitable rotational axes.

Also, because the movement of the moveable part was limited to prescribed directions by supporting the moveable part (coil support member 3 and lens holder 5) on the fixed part by using sheet springs 2 and 4, no special guide mechanism was required.

### INDUSTRIAL UTILITY

The magnetic actuator of the present invention is particularly useful for use in scanning laser radar devices because an effective damping action is provided against external vibrations without the damping action affecting the drive property of the actuator.

### BRIEF DESCRIPTION OF THE DRAWINGS

Figure 1 is a perspective view of a laser scanning actuator embodying the present invention;
Figure 2 is a plan view of the laser scanning actuator shown in Figure 1;
Figure 3 is a side view as seen from arrow III in Figure 2;
Figure 4 is an exploded perspective view of an essential part of the laser scanning actuator shown in Figure 1;
Figure 5 is a fragmentary side view of the vertical drive magnetic circuit;
Figure 6 is a fragmentary plan view of the lateral drive magnetic circuit;
Figure 7 is a perspective view showing the mode of electric connection between the sheet springs and coil;
Figure 8a is a diagram showing the coil arrangement of a first embodiment;
Figure 8b is a view similar to Figure 8a showing a modification of the first embodiment;
Figure 8c is a view similar to Figure 8a showing another modification of the first embodiment;
Figure 9 is a graph showing the displacement property of the actuator of the first embodiment when driven in DC mode;
Figure 10 is a graph showing the frequency response of the actuator of the first embodiment when subjected external vibrations;
Figure 11 is a view similar to Figure 5 showing a second embodiment;
Figure 12 is a simplified fragmentary perspective view of the second embodiment;
Figure 13 is a graph showing the displacement property of the actuator of the second embodiment when driven in DC mode;
Figure 14 is a graph showing the frequency response of the actuator of the second embodiment when subjected external vibrations;
Figure 15 is a circuit diagram showing a third diagram;
Figure 16a is a diagram comparing the drive coil with the reference coil;
Figure 16b is a simplified drive circuit diagram of the coil of Figure 16a;
Figure 17 is a graph showing the frequency response of the actuator when subjected to external vibrations; and
Figure 18 is a graph showing the frequency response of the actuator when driven.

### GLOSSARY

- 1: fixed base
- 2: sheet spring for vertical displacement
- 3: coil support member
- 4: sheet spring for lateral displacement
- 5: lens holder
- 7: scanning lens photodiode
- 9: light receiving lens
- 11: vertical drive coil
- 13a, 13b: magnet
- 15: U-shaped yoke
- 24: reference coil
- 27: capacitor
- 29: capacitor

- 6: laser diode
- 8: light receiving
- 10: holding plate
- 12: yoke
- 14: lateral drive coil
- 16a, 16b: magnet
- 26: accessory coil
- 28: short circuit coil
- 30: accessory coil

## Claims

1. A magnetic actuator comprising a fixed part, a magnet attached to the fixed part, a moveable part resiliently supported by the fixed part via a spring member so as to be moveable at least in one direction, a first coil provided on the movable part and a drive circuit connected to the first coil for magnetically actuating the moveable part with a cooperation between the magnet and coil, **characterized by** that:
an oscillation of the moveable part owing to external disturbances is attenuated by an electromotive force produced in the first coil as a result of the oscillation of the moveable part, and
a second coil is connected to the first coil for adjusting an attenuation property of the first coil by separately providing an attenuation property.

2. The magnetic actuator according to claim 1, wherein the second coil consists of an accessory coil connected in parallel with the first coil.

3. The magnetic actuator according to claim 2, wherein a capacitor is connected to the accessory coil to form a resonance circuit in cooperation with the accessory coil.

4. The magnetic actuator according to claim 1, wherein the second coil consists of a short circuit coil provided on the moveable part separately from the first coil.

5. The magnetic actuator according to claim 4, wherein another coil and a capacitor are connected to the second coil so as to jointly form a resonance circuit.

6. The magnetic actuator according to claim 1, wherein a resonance frequency of the electric resonance circuit formed by the first coil and second coil substantially agrees with a spring mass system of the actuator, and a drive frequency of the actuator is substantially lower than the resonance frequency of the spring mass system.

7. The magnetic actuator according to claim 1, wherein the actuator is configured to be used in an onboard equipment.
